# EUROPÄISCHE PATENTSCHRIFT

(11) **EP 0 642 069 B1**
(45) Veröffentlichungstag und Bekanntmachung des Hinweises auf die Patenterteilung: **08.07.1998**
(21) Anmeldenummer: 94112816.7
(22) Anmeldetag: 17.08.1994
(51) Int. Cl.: G05D 23/19

(54) **Regeleinrichtung**
Regulation device
Dispositif de régulation

(30) Priorität: 23.08.1993 AT 1688/93
(43) Veröffentlichungstag der Anmeldung: 08.03.1995
(73) Patentinhaber: Joh. Vaillant GmbH u. Co., 42850 Remscheid (DE); VAILLANT S.A.R.L, 94045 Créteil Cedex (FR); VAILLANT Ges.m.b.H, 1231 Wien (AT); Vaillant B.V., 1100 DT Amsterdam (NL); Vaillant GmbH, 8953 Dietikon 1 (CH)
(72) Erfinder: Burgdorf, Achim, D-42929 Wermelskirchen (DE); Gaisbauer, Norbert, D-42799 Leichlingen (DE); Hangauer, Wilfried, Dr., D-42499 Hückeswagen (DE); Holschbach, Peter, D-42853 Remscheid (DE); Manz, Dietmar, D-51709 Marienheide (DE); Ortlinghaus, Ulrich, D-42859 Remscheid (DE); Wolter, Martin, D-42857 Remscheid (DE)
(74) Vertreter: Heim, Johann-Ludwig, Dipl.-Ing.

(56) Entgegenhaltungen:
- EP-A- 0 351 716
- DE-A- 3 538 934
- DE-A- 4 203 127
- PATENT ABSTRACTS OF JAPAN vol. 17, no. 277 (P-1546) 27. Mai 1993 & JP-A-05 011 853 (MASHUSHITA ELECTRIC IND CO) 22. Januar 1993
- PATENT ABSTRACTS OF JAPAN Bd. 16, Nr. 217 (M-1252) 21 Mai 1992 & JP-A-04 039 569 (MIYAMOTO NORIHIRO) 10 Februar 1992

## Beschreibung

Die Erfindung bezieht sich auf ein Verfahren zum Regeln der Brauchwasser-Auslauftemperatur eines Umlaufwasserheizers gemäß dem Oberbegriff des Patentanspruchs 1.

Zum Beispiel bei der Brauchwasser-Auslauftemperaturregelung bei Umlaufwasserheizern ist es bekannt, die Brauchwasser-Auslauftemperatur als Ist-Wert einem Proportionalregler zuzuführen, der als Stellglied ein Gasmagnetventil des Umlaufwasserheizers beherrscht. Dem P-Regler ist ein PI-Regler vorgeschaltet, dessen Ausgang den P-Regler steuert und dessen Eingang der Ist-Wert der Brauchwasser-Auslauftemperatur und deren Soll-Wert zugeführt ist. Der PI-Regler arbeitet als Vorregler, beziehungsweise beide Regler bilden eine Kaskade.

Bedingt durch die Eigenheiten des Umlaufwasserheizers, der zunächst Vorlauftemperaturwasser eines Kreises aufheizt, das dann seine Wärme in einem Sekundärwärmetauscher auf das aufzuheizende durchfließende kalte Brauchwasser überträgt, kommt es zu nicht mehr vertretbaren Abweichungen des Brauchwasser-Temperatur-Ist-Wertes vom vorgegebenen Soll-Wert. Die Gründe hierfür liegen vor allem in den sich zeitabhängig ändernden Charakteristiken der Regelstrecke, in der großen Zeitkonstante des gesamten Systems, in Einschwingvorgängen beim Brauchwasser-Zapfbeginn und in Brauchwasser-Durchsatzänderungen.

Es hat sich gezeigt, daß man zwar die Regelkaskade optimieren kann, daß das aber erkauft wird mit einer Verschlechterung des Gesamtverhaltens des Reglers. Die einzelnen Einflußgrößen auf die Brauchwassertemperatur-Auslaufregelung widersprechen sich, so daß eine Optimierung des Verhaltens einer Einflußgröße in der Regel zu einer Verschlechterung des Verhaltens einer anderen führt.

Um dennoch mehrere Einflußgrößen gewichtet berücksichtigen zu können, wurde gemäß der US-PS 5 156 013 für die Steuerung eines Absorptionskühlschrankes die Verwendung eines Fuzzy-Prozessors vorgeschlagen.

Es besteht die Aufgabe, ein Regelverfahren anzugeben, bei dem es gelingt, die einzelnen einander widersprechenden Störgrößen der Regelung und die sich ändernden Charakteristiken der Regelstrecke in ihrem Einfluß zu minimieren.

Die Lösung der Aufgabe für die Regelung der Brauchwasser-Auslauftemperatur liegt in den kennzeichnenden Merkmalen des unabhängigen Verfahrensanspruchs.

Durch die Merkmale des unabhängigen Anspruchs ergibt sich der Vorteil, daß es durch Auswahl der wesentlichen momentanen Charakteristiken und/oder Störgrößen der Regelung gelingt, deren Einfluß auf die Regelgüte des Regelverfahrens beziehungsweise der Regeleinrichtung so klein wie möglich zu halten, ohne den Aufwand für den Regler selbst in nicht mehr vertretbare Höhen zu treiben.

Weitere Ausgestaltungen und besonders vorteilhafte Weiterbildungen gehen aus den Merkmalen der Unteransprüche und aus der nachfolgenden Beschreibung einiger Ausführungsbeispiele der Erfindung näher hervor.

Es zeigen:

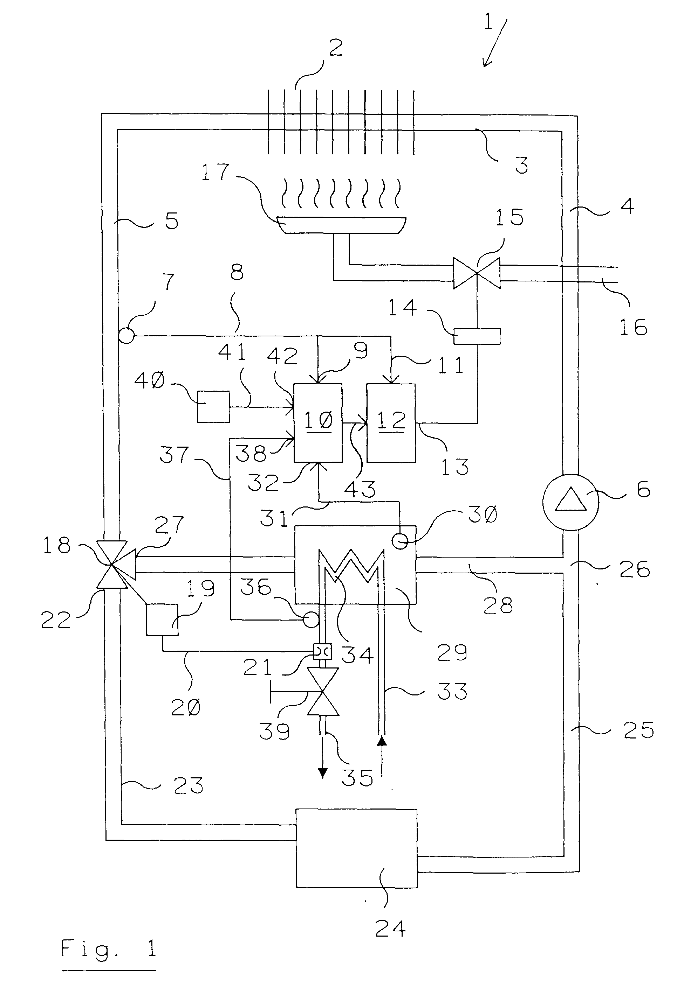

Figur 1 das Schaltbild eines Umlaufwasserheizers,
Figur 2 ein Blockdiagramm einer ersten Ausführung des Reglers und
Figur 3 ein Blockdiagramm einer zweiten Ausführung des Reglers.

In allen drei Figuren bedeuten gleiche Bezugszeichen jeweils die gleichen Einzelheiten.

Ein Umlaufwasserheizer 1 weist einen Primärwärmetauscher 2 auf, der von einem oder mehreren wasserführenden Rohren 3 durchsetzt ist, die an eine Rücklaufleitung 4 und eine Vorlaufleitung 5 angeschlossen sind, wobei in der Rücklaufleitung 4 eine Umwälzpumpe 6 vorgesehen ist. Die Temperatur des Wassers in der Vorlaufleitung wird durch einen Vorlauftemperaturfühler 7 abgefühlt, der über eine Leitung 8 sowohl auf einen ersten Eingang 9 eines Fuzzy-Reglers 10 wie auch einen zweiten Eingang 11 eines P-Reglers 12 geschaltet ist. Ein Ausgang 13 des P-Reglers führt die Stellgröße des Reglers, die auf einen Elektromagneten 14 eines Proportionalgasventils 15 geschaltet ist, das im Zuge einer Gasleitung 16 angeordnet ist, die zu einem den Primärwärmetauscher 2 beheizenden Brenner 17 führt.

Die Vorlaufleitung 5 führt zu einem Umschaltventil 18, das von einem Stellmotor 19 beherrscht ist, der über eine hydraulische Leitung 20 an einem Zapfwasserschalter 21 angeschlossen ist. Das Umschaltventil 18 weist einen ersten Ausgang 22 auf, von dem eine Heizkörpervorlaufleitung 23 abgeht, die zu einer Vielzahl von parallel und/oder in Serie geschalteten Einzelheizkörpern 24, die auch von einer Fußbodenheizungsanlage gebildet werden können, führt, an die sich rücklaufseitig eine Heizkörperrücklaufleitung 25 anschließt, die über einen Verzweigungspunkt 26 an den Saugstutzen der Pumpe 6 angeschlossen ist.

Ein zweiter Ausgang 27 des Umschaltventils führt über eine Zweigleitung 28 zum Verzweigungspunkt 26, wobei in die Zweigleitung 28 ein Sekundärwärmetauscher 29 für Brauchwasser eingeschaltet ist. Der gesamte Innenraum des Sekundärwärmetauschers 29 ist von Heizungswasser gefüllt, dessen Temperatur über einen Ist-Wert-Geber 30 abgefühlt wird, der über eine Leitung 31 an einen Eingang 32 des Fuzzy-Reglers 10 aufgeschaltet ist. Eine Kaltwasserzapfleitung 33 führt vom speisenden Kaltwassernetz zu einer im Inneren des Sekundärwärmetauschers angeordneten Wärmetauscherrohrschlange 34, die den Sekundärwärmetauscher 29 als Brauchwasser-Zapfleitung 35 verläßt, an der ein Ist-Wert-Geber 36 für die Brauchwasser-Auslauftemperatur angeschlossen ist, der über eine Leitung 37 mit einem weiteren Eingang 38 des Fuzzy-Reglers verbunden ist. An der Brauchwasser-Auslaufleitung 35 ist auch der Wasserschalter 21 angeordnet, in ihr befindet sich weiterhin ein Brauchwasser-Zapfventil 39.

Ein Soll-Wert-Geber 40 ist über eine Leitung 41 auf einen Eingang 42 des Fuzzy-Reglers geschaltet. Am Soll-Wert-Geber 40 kann über einen Potentiometer die gewünschte vorgegebene Brauchwassertemperatur eingestellt werden. Wesentlich ist noch, daß ein Ausgang 43 des Fuzzy-Reglers 10 einen Eingang des P-Reglers 12 bildet.

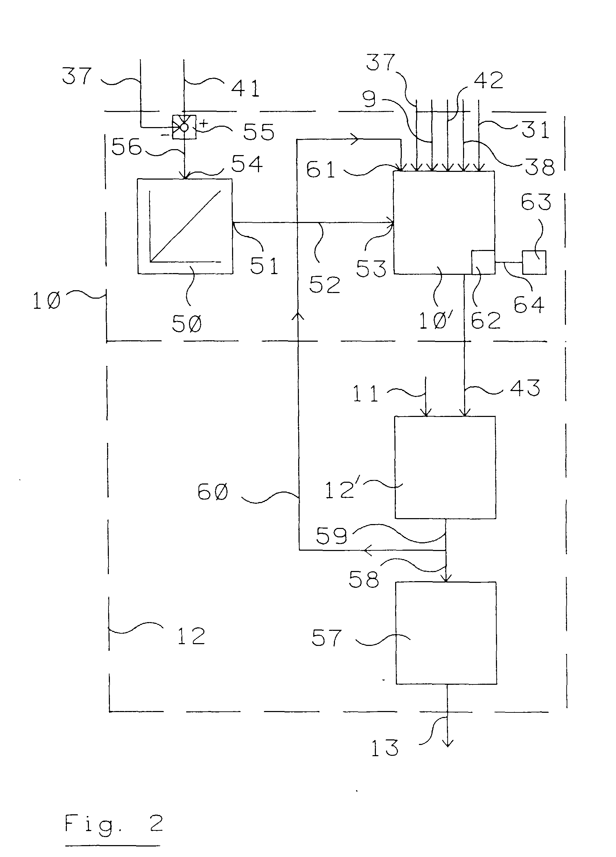

Aus der Figur 2 geht der Aufbau der Regeleinrichtung beziehungsweise die Wirkung des Regelverfahrens näher hervor. So zeigt sich, daß der Fuzzy-Regler 10 neben dem eigentlichen Fuzzy-Regler 10' noch einen Integrator 50 aufweist, dessen Ausgang 51 über eine Leitung 52 mit einem Eingang 53 des Fuzzy-Reglers verbunden ist. Auf einen Eingang 54 des Integrators sind die Leitungen 37 und 41 geschaltet, aus denen von einem Subtraktionsglied 55 die Differenz gebildet wird, die über eine Leitung 56 auf den Eingang 54 geschaltet ist. Auf der Leitung 56 liegt somit die Regelabweichung, das heißt, die Abweichung der Brauchwasser-Ist-Temperatur von deren Soll-Wert. Es versteht sich, daß die Wirkung des Integrators 50 begrenzt werden kann oder daß er auch zurückgesetzt wird.

Wesentlich ist, daß der P-Regler 12 neben dem eigentlichen P-Regler 12' noch einen Stellgrößenumformer 57 aufweist, der über eine Leitung 58 am Ausgang 59 des eigentlichen P-Reglers 12' liegt. Diese Leitung 58 führt als Stellgröße die Geräteleistung, das heißt, den Öffnungsgrad des Magnetventils 14/15, der andererseits die im Brenner umgesetzte Wärmeleistung beherrscht. Über eine Leitung 60 ist diese Größe auf einen weiteren Eingang 61 des Fuzzy-Reglers zurückgeführt.

Der Fuzzy-Regler weist Speicherplätze 62 auf, die über eine Eingabeeinrichtung 63 und Leitung 64 mit Informationen über die Charakteristika der Regelstrecke belegt werden können.

Man kann erkennen, daß zunächst die wesentlichen Störgrößen der Auslauftemperaturregelung über die Leitungen 9, 31, 32, 37, 38 und 42 auf Eingänge des Fuzzy-Reglers geführt werden. So bildet zum Beispiel der Wert der Vorlauftemperaturänderung, gemessen durch den Ist-Wert-Geber 7, eine wesentliche Störgröße für die Konstanz der gewünschten Brauchwasser-Auslauftemperatur. Eine weitere Störgröße wird gebildet durch die Temperatur des Heizungswassers, das im Inneren des Sekundärwärmetauschers 29 gespeichert ist und dessen Temperatur über den Ist-Wert-Geber 30 abgefühlt ist. Dieser Wert wird über die Leitung 31 dem Fuzzy-Regler zugeführt. Eine weitere (im konkreten Ausführungsbeispiel allerdings nicht erfaßte) Störgröße wäre die Größe des Brauchwasserdurchsatzes. Schließlich wäre eine weitere Störgröße die Brauchwasser-Einlauftemperatur. Eine weitere Störgröße stellt die Größe der maximalen und/oder augenblicklichen Geräteleistung dar, die über die Leitung 60 rückgeführt ist.

Das Erfassen weiterer Störgrößen wäre durchaus möglich und ist nur eine Frage des zu treibenden Aufwandes.

Andererseits werden dem Fuzzy-Regler auch wesentliche Charakteristika der Regelstrecke zugeführt.

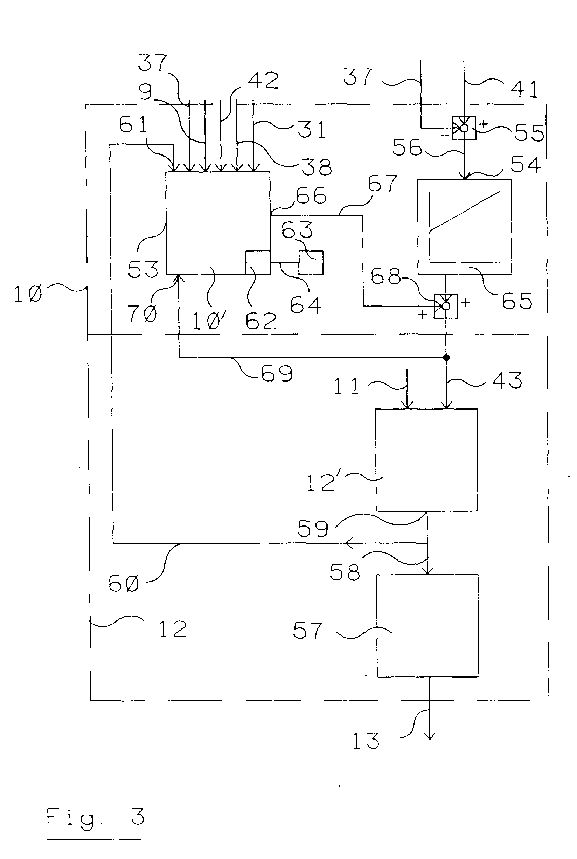

Die Figur 3 zeigt eine Variante zur Regeleinrichtung nach Figur 2, bei der dem eigentlichen Fuzzy-Regler 10' ein PI-Regler 65 parallel geschaltet ist. Ein Ausgang 66 des Fuzzy-Reglers ist über eine Leitung 67 auf einen Addierer 68 geschaltet, von dem die Leitung 43 abgeht. Die Leitung 43 im Bereich zwischen Addierer 68 und dem eigentlichen PI-Regler 12' ist über eine Leitung 69 auf einen weiteren Eingang 70 des Fuzzy-Reglers geführt. Der Fuzzy-Regler 10' dient im Rahmen der Figur 3 dazu, bestimmte Mängel des PI-Reglers 65 auszugleichen. Aus diesem Grunde werden hier die einzelnen Störgrößen oder Charakteristika der Regelstrecke dem Fuzzy-Regler zugeführt, dort verknüpft und bearbeitet und als Additionsausgangsgröße über die Leitung 67 dem Eingang des eigentlichen P-Reglers 12' zugeführt. Das Ausgangssignal des Fuzzy-Reglers addiert sich also zum Ausgangssignal des PI-Reglers 65.

Dem Fuzzy-Regler nach Figur 3 liegen die folgenden Informationen in den Speicherplätzen 62 zugrunde. Weitere Informationen können bei Vorliegen spezieller Bedingungen der Regelstrecke oder spezieller Störgrößen vorgegeben und ergänzt werden.
1. Wenn die Vorlauftemperatur vor der Umschaltung des Umlaufwasserheizers von Heiz- auf Brauchwasserbetrieb groß ist, dann ist der Ausgangswert des Fuzzy-Reglers auf der Leitung 43 klein und umgekehrt.
2. Wenn ein hoher Brauchwassertemperatur-Soll-Wert am Soll-Wert-Geber 40 eingestellt ist, dann ist der Korrekturwert des Fuzzy-Reglers, der auf der Leitung 67 steht, groß und umgekehrt.
3. Wenn die Differenz zwischen der Vorlauf-Ist-Temperatur, gemessen durch den Ist-Wert-Geber 7, und der Brauchwasserauslauf-Ist-Temperatur, gemessen durch den Ist-Wert-Geber 36, klein ist, dann ist auch der Korrekturwert klein und umgekehrt.
4. Wenn die Änderung der Vorlauf-Ist-Temperatur hoch und außerdem positiv ist, wobei dieser Gradient vom Fuzzy-Regler selbst erfaßt wird und andererseits die aktuelle Geräteleistung, deren elektrische Abbildung auf der Leitung 58 steht und über die Leitung 60 dem Fuzzy-Regler zurückgegeben wird, hoch ist, dann ist der Korrekturwert klein und umgekehrt.
5. Wenn die Differenz zwischen der Speicher-Ist-Temperatur, gemessen über den Ist-Wert-Geber 30, und der Brauchwasserauslauf-Ist-Temperatur, gemessen über den Ist-Wert-Geber 36, groß ist, dann ist der Korrekturwert groß und umgekehrt.
6. Wenn die Differenz zwischen der Vorlauf-Ist-Temperatur, gemessen durch den Ist-Wert-Geber 7, und der Speicher-Ist-Temperatur, gemessen durch den Ist-Wert-Geber 30, groß ist, wobei die Differenz im Fuzzy-Regler selbst gebildet wird, und die Änderung der Geräteleistung klein ist, dann ist der Korrekturwert groß, wobei es im Fuzzy-Regler möglich ist, den Gradienten der Größe auf der Leitung 58 zu bilden.
7. Wenn die Änderung der Vorlauftemperatur, gemessen durch den Ist-Wert-Geber 7, hoch und positiv ist und einerseits die Geräteleistung klein ist, die über die Leitung 60 rückgeführte Größe dem Fuzzy-Regler bekannt ist und andererseits die Differenz zwischen dem Vorlauftemperatur-Soll-Wert entsprechend der Größe der Spannung auf der Leitung 43 und der Vorlauf-Ist-Temperatur, gegeben durch den Ist-Wert-Geber 7, groß ist, dann ist der Korrekturwert groß und umgekehrt.

Mit den eben beschriebenen Anweisungen kann die Einschwingzeit für die Brauchwasserbereitung kleingehalten werden. Die Einschwingzeit ist hierbei definiert von der Zeitspanne, die vergeht nach dem Öffnen des Brauchwasser-Zapfventils 39 bis zum Erreichen der Brauchwasser-Auslauftemperatur, die am Soll-Wert-Geber 41 eingestellt entspricht. Die eben aufgestellten Regeln entsprechen Charakteristika der Regelstrecke, weil die unter 1. beschriebene Anweisung den Anfangszustand der Regelstrecke darstellt und der Endzustand der Regelstrecke von dem Anfangszustand erheblich abweicht. Das Verhalten der Regelstrecke bei hoher Vorlauftemperatur ist ein anderes als bei niedriger Vorlauftemperatur, weil das Übertragungsverhalten der beiden Wärmetauscher 2 und 29 sich mit der Höhe der Vorlauftemperatur ändert. Andererseits ändert sich die Zeitkonstante der Regelstrecke dahin gehend, daß bei hohen Änderungsgeschwindigkeiten (Gradienten) die Verzögerungszeiten kleiner werden und umgekehrt.

Es gibt andererseits auch einige Regeln, um im stationären Zustand, das heißt während des Zapfens von Brauchwasser, Überschwingen der Regelung zu vermeiden. Andererseits gelten diese Regeln auch für die Verkürzung der Einschwingzeit der Regeleinrichtung.
8. Wenn die Differenz zwischen der Brauchwasserauslauf-Soll-Temperatur, eingestellt am Soll-Wert-Geber 40, und der Vorlauf-Ist-Temperatur, gegeben durch den Ist-Wert-Geber 7, positiv ist, dann ist der Korrekturwert groß und umgekehrt.
9. Wenn die Brauchwasser-Auslauftemperatur-Regelabweichung klein ist und der Gradient der Brauchwasserauslauf-Ist-Temperatur groß ist, dann ist der Korrekturwert klein und umgekehrt.
10. Wenn die Brauchwasser-Auslauftemperatur-Regelabweichung klein ist und der Gradient der Brauchwasserauslauf-Ist-Temperatur klein ist, dann befindet sich der Korrekturwert auf einem mittleren Niveau.
11. Je größer die bis zum Anregelzeitpunkt ab Zapfbeginn verbleibende Zeitspanne ist, um so größer ist der Korrekturwert, das bedeutet, daß mit kleiner werdender Zeitspanne ab Zapfbeginn der Korrekturwert kleiner wird. Hierbei kann der Anregelzeitpunkt ausgerechnet werden, indem man, ausgehend von einem momentanen Zeitpunkt, den Gradienten der Brauchwasser-Ist-Temperatur nimmt, ihn mit der Höhe des Soll-Wertes vergleicht und dann über die Differenz der beiden Punkte auf die noch verbleibende Zeit schließt.

## Patentansprüche

1. Verfahren zum Regeln der Brauchwasser-Auslauftemperatur eines Umlaufwasserheizers, der einen von einem Proportionalgasventil (15) gesteuerten Brenner (17) als Stellglied, einen Sekundärwärmetauscher (29), einen konventionellen Regler (12, 12') und einen im Soll-Wert-Pfad (43) des konventionellen Reglers (12, 12') angeordneten Fuzzy-Regler (10, 10') aufweist, wobei der Fuzzy-Regler (10, 10') mit einem Brauchwasser-Auslauftemperaturfühler als ersten Ist-Wert-Geber (36), einem ersten Soll-Wert-Geber (40) für die gewünschte Brauchwasser-Auslauftemperatur, einem zweiten Ist-Wert-Geber (7) für die Vorlauftemperatur und gegebenenfalls weiteren Gebern für wesentliche Störgrößen, insbesondere mit einer Eingabeeinrichtung (63) für Informationen über Charakteristiken des konventionellen Reglers (12, 12'), einem dritten Ist-Wert-Geber (30) für die Temperatur im Inneren des Sekundärwärmetauschers (29) und einem Geber für die Geräteleistung, versehen ist, und wobei der Fuzzy-Regler (10, 10') eine Auswahl der wesentlichen momentanen Störgrößen und eine Verknüpfung derselben nach vorgegebenen Relationen vornimmt, dadurch gekennzeichnet, daß vor dem Umschalten des Umlaufwasserheizers von Heiz- auf Brauchwasser-Zapfbetrieb bei hoher Vorlauftemperatur das Ausgangssignal des Fuzzy-Reglers (10, 10') kleingehalten ist und umgekehrt.

2. Verfahren nach Anspruch 1, dadurch gekennzeichnet, daß bei hohem Brauchwasser-Temperatur-Soll-Wert das Ausgangssignal des Fuzzy-Reglers (10, 10') groß ist und umgekehrt.

3. Verfahren nach einem der Ansprüche 1 oder 2, dadurch gekennzeichnet, daß bei großer Differenz zwischen Vorlauf-Ist-Temperatur und Brauchwasserauslauf-lst-Temperatur und großer Geräteleistung das Ausgangssignal des Fuzzy-Reglers (10, 10') klein ist und umgekehrt.

4. Verfahren nach einem der Ansprüche 1 bis 3, dadurch gekennzeichnet, daß bei kleiner Differenz zwischen Vorlauf-Ist-Temperatur und Brauchwasserauslauf-Ist-Temperatur das Ausgangssignal des Fuzzy-Reglers (10, 10') klein ist und umgekehrt.

5. Verfahren nach einem der Ansprüche 1 bis 4, dadurch gekennzeichnet, daß bei großer Differenz zwischen Speicher-lst-Temperatur des Sekundärwärmetauschers (29) und Brauchwasserauslauf-lst-Temperatur das Ausgangssignal des Fuzzy-Reglers (10, 10') groß ist und umgekehrt.

6. Verfahren nach einem der Ansprüche 1 bis 5, dadurch gekennzeichnet, daß bei großer Differenz zwischen Vorlauf-Ist-Temperatur und Speicher-lst-Temperatur des Sekundärwärmetauschers (29) und kleiner Geräteleistung das Ausgangssignal des Fuzzy-Reglers (10, 10') groß ist und umgekehrt.

7. Verfahren nach einem der Ansprüche 1 bis 6, dadurch gekennzeichnet, daß bei hoher Änderungsgeschwindigkeit der Vorlauf-Ist-Temperatur, kleiner Geräteleistung und großer Differenz zwischen Vorlauf-Soll- und -Ist-Temperatur das Ausgangssignal des Fuzzy-Reglers (10, 10') groß ist und umgekehrt.

8. Verfahren nach einem der Ansprüche 1 bis 7, dadurch gekennzeichnet, daß bei positiver Differenz zwischen Brauchwasserauslauf-Soll-Temperatur und Vorlauf-Ist-Temperatur das Ausgangssignal des Fuzzy-Reglers (10, 10') groß ist und umgekehrt.

9. Verfahren nach einem der Ansprüche 1 bis 8, dadurch gekennzeichnet, daß bei kleiner Regelabweichung der Brauchwasser-Auslauftemperatur und großer Änderungsgeschwindigkeit der Brauchwasserauslauf-lst-Temperatur das Ausgangssignal des Fuzzy-Reglers (10, 10') klein ist und umgekehrt.

10. Verfahren nach einem der Ansprüche 1 bis 9, dadurch gekennzeichnet, daß bei kleiner Regelabweichung der Brauchwasser-Auslauftemperatur und kleiner Änderungsgeschwindigkeit der Brauchwasserauslauf-lst-Temperatur das Ausgangssignal des Fuzzy-Reglers (10, 10') auf mittlerem Niveau liegt.

## Claims

1. Process for controlling the service water outlet temperature of a closed-circuit water heater having a burner (17) controlled by a proportional gas valve (15) and serving as an actuating element, and further having a secondary heat exchanger (29), a conventional controller (12, 12') and a fuzzy controller (10, 10') arranged in the setpoint path (43) of the said conventional controller (12, 12'), such fuzzy controller (10, 10') being provided with a service water outlet temperature sensor as a first actual-value detector (36), a first setpoint selector (40) for the desired service water outlet temperature, a second actual-value detector (7) for the upstream temperature and, if required, with further detectors for essential disturbance variables, especially an input device (63) for information on the characteristics of the conventional controller (12, 12'), moreover with a third actual-value detector (30) for the temperature in the interior of the secondary heat exchanger (29), and a selector for the equipment power rating, with such fuzzy controller making a selection of the essential current disturbance variables and effecting a linkage of the same in accordance with preset relation-ships, **characterized in that** prior to switching the closed-circuit water heater from heating operation to service water tapping operation the output signal of the fuzzy controller (10, 10') is held low if the upstream temperature is high, and vice versa.

2. Process as claimed in Claim 1, **characterized in that** the output signal of the fuzzy controller (10, 10') is high if the setpoint value for the service water temperature is high, and vice versa.

3. Process as claimed in any of Claims 1 and 2, **characterized in that** the output signal of the fuzzy controller (10, 10') is low if there is a great difference between the actual upstream temperature and the actual service water outlet temperature and if the equipment has a high power rating, and vice versa.

4. Process as claimed in any of Claims 1 to 3, **characterized in that** the output signal of the fuzzy controller (10, 10') is low if there is a small difference between the actual upstream temperature and the actual service water outlet temperature, and vice versa.

5. Process as claimed in any of Claims 1 to 4, **characterized in that** the output signal of the fuzzy controller (10, 10') is high if there is a great difference between the actual reservoir temperature of the secondary heat exchanger (29) and the actual service water outlet temperature, and vice versa.

6. Process as claimed in any of Claims 1 to 5, **characterized in that** the output signal of the fuzzy controller (10, 10') is high if there is a great difference between the actual upstream temperature and the actual reservoir tempe-rature of the secondary heat exchanger (29) and if the equipment has a low power rating, and vice versa.

7. Process as claimed in any of Claims 1 to 6, **characterized in that** the output signal of the fuzzy controller (10, 10') is high if the actual upstream temperature is changing rapidly, the equipment has a low power rating and if there is a great difference between the setpoint upstream temperature and the actual upstream temperature, and vice versa.

8. Process as claimed in any of Claims 1 to 7, **characterized in that** the output signal of the fuzzy controller (10, 10') is high if the difference between the setpoint service water outlet temperature and the actual upstream temperature is positive, and vice versa.

9. Process as claimed in any of Claims 1 to 8, **characterized in that** the output signal of the fuzzy controller (10, 10') is low if there is a small control deviation of the service water outlet temperature and if the actual service water outlet temperature is changing rapidly, and vice versa.

10. Process as claimed in any of Claims 1 to 9, **characterized in that** the output signal of the fuzzy controller (10, 10') is at a medium level if there is a small control deviation of the service water outlet temperature and the actual service water outlet temperature is changing slowly.

## Revendications

1. Procédé pour la régulation de la température de sortie d'eau sanitaire d'un chauffe-eau à circulation qui comprend un brûleur (17) commandé par une valve de gaz proportionnelle (15) et faisant fonction d'organe de réglage, un échangeur de chaleur secondaire (29), un régulateur conventionnel (12, 12') et un régulateur fuzzy (10, 10') disposé dans la voie de consigne (43) du régulateur conventionnel (12, 12'), le régulateur fuzzy (10, 10') étant doté d'une sonde contrôlant la température de sortie de l'eau sanitaire et servant de premier capteur de mesure (36), d'un premier générateur de consignes (40) déterminant la température de sortie voulue de l'eau sanitaire, d'un deuxième capteur de mesure (7) surveillant la température d'alimentation, et éventuellement d'autres capteurs pour des grandeurs parasites substantielles, notamment d'une unité d'entrée (63) pour des informations relatives aux caractéristiques du régulateur conventionnel (12, 12'), d'un troisième capteur (30) mesurant la température à l'intérieur de l'échangeur de chaleur secondaire (29), et d'un capteur contrôlant la performance de l'ensemble, ledit régulateur fuzzy (10, 10') assurant une sélection des grandeurs parasites substantielles momentanées et leur combinaison selon des relations préréglées, procédé caractérisé par le fait qu'avant la commutation du chauffe-eau à circulation entre prélèvement d'eau de chauffage et d'eau sanitaire à une température d'alimentation élevée, le signal de sortie du régulateur fuzzy (10, 10') est maintenu faible, et inversement.

2. Procédé suivant la revendication 1, caractérisé par le fait que si la consigne de température d'eau sanitaire est élevée, le signal de sortie du régulateur fuzzy (10. 10') est puissant, et inversement.

3. Procédé suivant l'une des revendications 1 ou 2, caractérisé par le fait qu'en cas de différence importante entre la température d'alimentation effective et la température de sortie effective de l'eau sanitaire, et de performance élevée de l'ensemble, le signal de sortie du régulateur fuzzy (10, 10') est faible, et inversement.

4. Procédé suivant l'une des revendications 1 à 3, caractérisé par le fait qu'en cas de différence faible entre la température d'alimentation effective et la température de sortie effective de l'eau sanitaire, le signal de sortie du régulateur fuzzy (10, 10') est faible, et inversement.

5. Procédé suivant l'une des revendications 1 à 4, caractérisé par le fait qu'en cas de différence importante entre la température intérieure effective de l'échangeur de chaleur secondaire (29) et la température de sortie effective de l'eau sanitaire, le signal de sortie du régulateur fuzzy (10, 10') est puissant, et inversement.

6. Procédé suivant l'une des revendications 1 à 5, caractérisé par le fait qu'en cas de différence importante entre la température d'alimentation effective et la température intérieure effective de l'échangeur de chaleur secondaire (29), et de performance faible de l'ensemble, le signal de sortie du régulateur fuzzy (10, 10') est puissant, et inversement.

7. Procédé suivant l'une des revendications 1 à 6, caractérisé par le fait qu'en cas de haute vitesse de variation de la température d'alimentation, de performance faible de l'ensemble et de différence importante entre les températures d'alimentation de consigne et effective, le signal de sortie du régulateur fuzzy (10, 10') est puissant, et inversement.

8. Procédé suivant l'une des revendications 1 à 7, caractérisé par le fait qu'en cas de différence positive entre la température de sortie de consigne de l'eau sanitaire et la température d'alimentation effective, le signal de sortie du régulateur fuzzy (10, 10') est puissant, et inversement.

9. Procédé suivant l'une des revendications 1 à 8, caractérisé par le fait qu'en cas de faible écart de réglage de la température de sortie de l'eau sanitaire et de haute vitesse de variation de la température de sortie effective de l'eau sanitaire, le signal de sortie du régulateur fuzzy (10, 10') est faible, et inversement.

10. Procédé suivant l'une des revendications 1 à 9, caractérisé par le fait qu'en cas de faible écart de réglage de la température de sortie de l'eau sanitaire et de faible vitesse de variation de la température de sortie effective de l'eau sanitaire, le signal de sortie du régulateur fuzzy (10, 10') se trouve à un niveau moyen.
